# FASCICULE DE BREVET EUROPEEN

(11) **EP 4 117 988 B1**
(45) Date de publication et mention de la délivrance du brevet: **30.07.2025**
(21) Numéro de dépôt: 21710007.2
(22) Date de dépôt: 10.03.2021
(51) Int. Cl.: B63B 35/44, B63J 4/00, C02F 3/12, C02F 3/32

(54) **STATION D'ÉPURATION D'EFFLUENTS DOMESTIQUES**
HAUSKLÄRANLAGE
DOMESTIC EFFLUENT TREATMENT PLANT

(30) Priorité: 11.03.2020 FR 2002394
(43) Date de publication de la demande: 18.01.2023
(73) Titulaire: Aquatech Innovation, 34070 Montpellier (FR)
(72) Inventeur: LASSABLIERE, Dominique, 34340 MARSEILLAN PLAGE (FR)
(74) Mandataire: Rhein, Alain
(86) Numéro de dépôt international: PCT/EP2021/056094
(87) Numéro de publication internationale: WO 2021/180811

(56) Documents cités:
- EP-A1- 3 514 051
- WO-A1-2019/104377
- US-A1- 2002 139 739
- US-A1- 2007 000 835
- US-A1- 2013 020 500

## Description

L'invention concerne une station d'épuration d'effluents domestiques flottante, comportant au moins une unité de traitement comprenant au moins une première cuve de traitement aérobie intégrée sur une plate-forme flottante principale de manière à s'étendre au moins en partie sous la ligne de flottaison de cette dernière, cette cuve de traitement aérobie étant pourvue de moyens de raccordement amont pour son alimentation en effluent à traiter et de moyens de raccordement aval d'évacuation d'effluent digéré.

La présente invention trouvera son application plus particulièrement dans le domaine des unités de traitement des eaux noires et grises domestiques, en provenance d'habitats en milieu aquatique ou installés en zone inondable.

Il est de plus en plus courant que d'étendre l'habitat au-dessus de l'eau, que ce soit en bordure de mer, de fleuve ou autre étendue aquatique. Si le type d'habitat peut varier : bateau, construction flottante ou sur pilotis, dans chacun des cas se pose le problème des effluents domestiques que l'on ne peut plus imaginer déverser sans traitement dans le milieu aquatique environnant.

Aussi ces habitations sont habituellement raccordées par des moyens spécifiques à une unité de traitement dédiée à terre. Les bateaux par exemple peuvent être équipés d'une cuve de rétention de leurs effluents, cuve susceptible d'être vidangée périodiquement pour acheminer ces effluents à une telle unité de traitement à terre.

Généralement, celle-ci est de configuration traditionnelle, comportant des infrastructures de génie civil intégrant toutes les étapes de traitement à l'issue desquelles l'eau rejetée est de qualité suffisante pour regagner la nature.

Si, en soi, ces solutions existantes répondent au besoin du traitement des effluents domestiques produits par ces habitations flottantes ou érigées en milieu aquatique, elles posent toutefois le problème non négligeable de l'acheminement des effluents depuis chaque habitation, en direction de la station d'épuration à terre. En particulier, dans le cas d'habitations non mobiles, soit il est mis en œuvre des moyens de pompage adaptés, soit le déversement de ces effluents s'effectue par gravité ce qui entraîne, comme on peut l'imaginer, un réseau d'évacuation complexe et coûteux entre chacune des habitations et la station d'épuration.

À cela il faut ajouter qu'en bordure de milieux aquatiques, la fréquence d'inondation est grandissante et les risques de pollution en cas de submersion de ces stations d'épuration sont importants.

Ce problème ne concerne pas exclusivement le traitement des effluents d'habitats en milieu aquatique, mais d'une manière plus générale de tout habitat situé en zone inondable.

En particulier, de nombreuses habitations de loisirs sont installées de manière saisonnière sur de telles zones inondables et leur raccordement à une unité fixe de traitement d'effluent peut entrainer les mêmes risques de pollution.

D'ailleurs, le caractère saisonnier d'occupation de ces logements de loisirs ou encore des habitats en milieu aquatique, rend le traitement de ces effluents plus difficile en raison de leur fluctuation sur des laps de temps très courts.

On connait, par le document US2002/0139739, un dispositif de traitement des eaux usés pour navire qui tente de solution le problème du stockage des effluents traités essentiellement par voie aérobie, lorsque ces effluents ne peuvent être rejeté dans la mer.

Plus particulièrement, il est connu de l'état de la technique correspondant au document EP3.514.051 un système intégré de traitement autonome des eaux usées pour les véhicules de loisir en général et plus particulièrement pour les habitations flottantes. Ce système de traitement sous forme d'un module de traitement aérobie des effluents peut être intégré dans une plateforme flottante, au milieu des modules de flotteurs disposés sous la structure de cette plateforme.

Une telle solution connue ne répond pas à la contrainte que pose la fluctuation sur des laps de temps très courts des effluents à traiter en, raison de ce caractère saisonnier d'occupation de ces logements de loisirs ou encore des habitats en milieu aquatique.

De plus, étant intégré dans la plateforme, la taille de cette dernière doit être adaptée au volume du module de traitement. Plus ce volume est important, plus la plateforme doit être conséquence pour se maintenir à flot.

Un autre inconvénient consiste en ce qu'au travers de ce seul module de traitement aérobie des effluents qui peut s'avérer insuffisant pour un rejet dans la nature, en particulier dans des eaux de baignade.

La présente invention se veut à même de répondre à ces problèmes que soulève l'état antérieur de la technique. C'est dans le cadre d'une première démarche inventive que l'on a imaginé équiper cette station d'épuration flottante d'au moins une cuve de stockage tampon en amont d'une unité de traitement des effluents, permettant, ainsi, de pallier les variations brutales des flux d'effluent à traiter.

De manière plus particulièrement avantageuse, cette cuve de stockage tampon s'étend au moins en partie sous la ligne de flottaison de la plate-forme flottante à laquelle elle est associée ;
Selon une autre particularité, elle est de volume variable.

Ainsi, en s'étendant sous cette ligne de flottaison de la plate-forme flottante le volume d'effluent contenu n'a que peu d'influence sur la flottabilité de cette plate-forme.

Inversement, en étant de volume variable, elle ne vient pas repousser verticalement de manière excessive cette plate-forme flottante lorsque cette cuve est vide.

En somme, au travers de ce volume variable de la cuve de stockage tampon s'étendant sous la ligne de flottaison de la plateforme, il est possible d'assurer un franc-bord sensiblement constant de la plateforme à laquelle est associée cette cuve est associée. Cette condition s'avérer primordiale dans certaines conditions d'implantation de la station d'épuration flottante, par exemple dans un port où elle peut être associée à d'autre installations flottante susceptibles d'être impactées par une variation éventuelle de ce franc-bord de la plateforme de la station.

Selon un autre avantage particulier de l'invention, la cuve de stockage tampon est conçu pour assurer un prétraitement anaérobie des effluents qu'elle contient.

Un tel prétraitement anaérobie a pour avantage la dégradation de certains composants comme les phosphates et l'azote, non dégradés au travers d'un traitement aérobie classique.

Ainsi, l'invention concerne une station d'épuration d'effluents domestiques flottante, comportant au moins une unité de traitement comprenant au moins une première cuve de traitement aérobie intégrée sur une plate-forme flottante principale de manière à s'étendre au moins en partie sous la ligne de flottaison de cette dernière, pour, sous l'effet de la poussée d'Archimède, réduire le poids supporté par cette dernière au travers de cette cuve de traitement aérobie, celle-ci étant étant pourvue de moyens de raccordement amont pour son alimentation en effluent à traiter et de moyens de raccordement aval d'évacuation d'effluent digéré, caractérisée en ce que l'unité de traitement comporte au moins une cuve de stockage tampon d'effluent à traiter connectée aux moyens de raccordement amont de la cuve de traitement aérobie et montée sur ladite plate-forme flottante principale ou une plate-forme flottante secondaire de manière à s'étendre en grande partie sous la ligne de flottaison de cette dernière, cette cuve de stockage tampon étant définie de volume variable et constituée par une bâche,

Selon une autre particularité de l'invention, cette cuve de stockage tampon est conçue pour assurer un prétraitement anaérobie des effluents.

Selon encore une autre particularité de cette invention, la station d'épuration comporte une unité de gestion de son fonctionnement en fonction du flux d'effluent alimentant la cuve de stockage tampon et du volume d'effluent contenu dans cette dernière.

Cette station d'épuration conforme à l'invention peut encore être équipée indifféremment ou en combinaison des moyens suivants :
De moyens de fonctionnement autonome comprenant, notamment, des moyens de production en énergie électrique autonome ;
D'au moins une unité collectrice d'effluent à traiter apte à être raccordée à une pluralité d'unités de production d'effluent

D'au moins une unité de traitement complémentaire, selon le cas associé à ladite plate-forme flottante principale ou secondaire ou à au moins une plate-forme flottante complémentaire.

Les avantages découlant de la présente invention consistent en ce qu'au travers de sa flottabilité, cette station d'épuration peut être implantée, tant dans des zones submersibles qu'en milieu aquatique.

Au travers d'une cuve de stockage tampon, qui plus est de volume variable, implantée en amont de l'unité de traitement, il est possible de gérer efficacement le traitement des effluents, malgré une variation importante de leurs flux. En s'étendant sous la ligne de flottaison de la plate-forme flottante à laquelle cette cuve de stockage tampon est associée et en étant de volume variable, elle ne remet pas en cause la flottabilité, ni même le franc-bord de cette plate-forme flottante.

Surtout, cette cuve de stockage tampon est en mesure d'assurer un prétraitement anaérobie des effluents contribuant à la dégradation de composants non dégradés par un traitement classique aérobie.

Ainsi, la combinaison de ce prétraitement anaérobie avec un traitement aérobie efficace en toutes circonstances grâce à une gestion optimisée du flux d'effluent à traiter, ensemble, qui plus est, complété éventuellement par au moins une unité de traitement naturel, telle une roselière, permet le rejet dans la nature, voire dans le milieu aquatique environnant de l'eau résiduelle issue du traitement en sortie de la station d'épuration.

D'autres buts et avantages de la présente invention apparaître au cours de description qui va suivre se rapportant un exemple de réalisation donné à titre indicatif et non limitative.

La compréhension de cette description sera facilitée en se référant au dessin ci-joint dans lesquelles :
[Fig.1] La figure 1 est une illustration schématisée éclaté d'une station d'épuration conforme à l'invention ;
[Fig.2] La figure 2 est une représentation schématisée du principe de la chaîne de traitement d'effluent au travers de cette station d'épuration selon l'invention ;
[Fig.3] La figure 3 est une représentation schématisée de l'unité de stockage tampon et de traitement anaérobie des effluents, la bâche étend hydro statiquement repoussée en applique contre un cylindre hydrostatique ;
[Fig.4] La figure 4 est une illustration similaire aux figures 3 et 4 et représente la bâche dans son état de remplissage maximal.

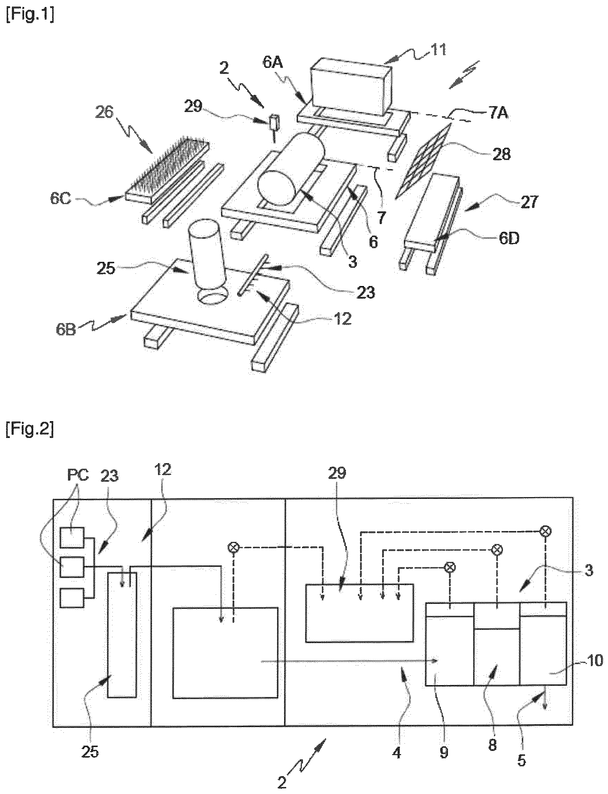

Telle que représentée dans la figure 1, la présente invention a trait à une station 1, flottante, pour l'épuration d'effluents domestiques, plus particulièrement en provenance d'habitat en zone inondable ou en milieu aquatique.

Cette station d'épuration 1 comporte au moins une unité de traitement 2 comprenant au moins une cuve de traitement aérobie 3 pourvue de moyens de raccordement amont 4 pour son alimentation en effluent à traiter et des moyens de raccordement aval 5 pour l'évacuation de ces effluents une fois traitée.

De manière particulière, cette cuve de traitement aérobie 3 est intégrée sur une plateforme flottante principale 6. Concrètement, sous une telle plateforme flottante sont disposés des flotteurs déterminant sa ligne de flottaison 7 une fois reposant sur l'eau.

Selon l'invention, la cuve de traitement aérobie 3 vient s'étendre au moins en partie sous cette ligne de flottaison 7 de cette plateforme flottante principale 6 pour, sous l'effet de la poussée d'Archimède, réduire le poids supporté par cette dernière au travers de cette cuve 3, une fois remplie d'effluent à traiter.

Plus particulièrement la cuve de traitement aérobie 3 s'intègre entre les flotteurs de manière à plonger dans l'eau sur laquelle peut venir repose de cette plateforme flottante 6.

Avantageusement, cette cuve de traitement aérobie 3 intègre un bioréacteur 8 dont on connaît les performances appliquées au traitement d'effluents domestiques.

Selon un mode de réalisation préférentiel, dans la cuve de traitement aérobie 3, en amont de ce bioréacteur 8, est encore délimité un compartiment collecteur 9 avec lequel communiquent les moyens de raccordement amont 4. Au travers de ce compartiment collecteur 9 le bioréacteur peut être alimenté de manière contrôlée en effluent à traiter.

En outre, cette cuve de traitement aérobie 3 comporte avantageusement un compartiment décanteur 10 dans lequel se déversent les effluents en sortie du bioréacteur 8 pour, après décantation, être évacués au travers des moyens de raccordement aval 5.

Selon une autre particularité de l'invention, l'unité de traitement 2 comporte au moins une cuve de stockage tampon 11 d'effluent à traiter connectée aux moyens de raccordement amont 4 de la cuve de traitement aérobie 3.

Là encore, cette cuve de stockage tampon 11 est montée sur ladite plate-forme flottante principale 6 ou une plate-forme flottante secondaire 6A de manière à s'étendre, tout comme la cuve de traitement aérobie 3, en grande partie sous la ligne de flottaison 7 ; 7A de cette dernière.

En somme cette cuve de stockage tampon 11 s'intègre entre des flotteurs de la plateforme, selon le cas principale 6 ou secondaire 6A, de manière à s'étendre dans l'eau sur laquelle peut reposer cette dernière.

Préférentiellement, cette cuve de stockage tampon 11 est conçue pour assurer un prétraitement anaérobie des effluents dont elle est alimentée, notamment par l'intermédiaire de moyens collecteurs 12 appropriés. Ainsi, cette cuve de stockage tampon est préférentiellement étanche à l'air, si ce n'est qu'elle peut être pourvu en partie supérieure d'un évent 20A comme cela est expliqué plus en avant dans la description.

Au travers de ce prétraitement anaérobie est assurée la dégradation de certains composants, tels que les phosphates et le nitrate par exemple, non dégradés par un traitement aérobie.

Selon l'invention, cette cuve de stockage tampon 11 est définie de volume variable et constituée par une bâche 13 dont le volume s'ajuste par pression hydrostatique en fonction de la quantité d'effluent contenu, en particulier lorsque la station d'épuration 1 est installée en milieu aquatique.

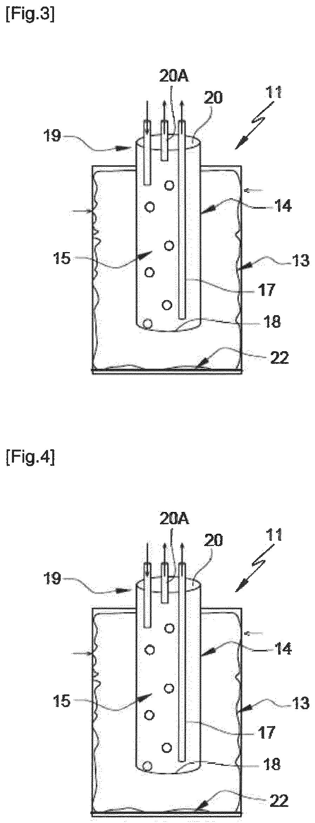

Selon un mode de réalisation avantageux, un tube hydrostatique rigide 14, préférentiellement de section cylindrique, s'étend verticalement à l'intérieur de cette bâche 13. Il limite ainsi le resserrement sur elle-même de cette bâche 13, en particulier lorsqu'elle contient une quantité réduite d'effluent à traiter, comme visible dans la figure 3. Les parois 15 de ce tube hydrostatique 14 sont ajourées de manière à favoriser l'écoulement des effluents à traiter depuis la bâche 13 à l'intérieur de ce tube hydrostatique 14 et inversement.

À l'intérieur de ce tube hydrostatique 14 pénètre, en outre, au moins un tube d'alimentation 16 en effluent à traiter coopérant avec lesdits moyens collecteurs 12, ainsi qu'au moins un tube de puisage 17 communiquant avec les moyens de raccordement amont 4 de la cuve de traitement aérobie 3.

Ces moyens de raccordement amont 4 peuvent comprendre des moyens de pompage pour assurer le prélèvement d'effluents depuis la cuve de stockage tampon 11 et alimenter la cuve de traitement aérobie 3 au travers du tube de puisage 17.

Plus particulièrement, le tube d'alimentation 16 débouche en partie haute dans le tube hydrostatique 14, tandis que le tube de puisage 17 s'étend largement en direction du fond 18 de ce dernier.

Préférentiellement, ce tube de puisage 17 ne s'étend pas au-delà de ce fond 18 et son extrémité est légèrement maintenue en retrait de ce fond 18, par ailleurs conçu débouchant. Cette configuration permet d'éviter que l'extrémité de ce tube de prélèvement 17 ne soit bouchée par la bâche 13 lorsque celle-ci se resserre par pression hydrostatique autour du tube 14.

Cette bâche 13 est refermée sur la partie haute sur le tube hydrostatique 14 au moyen d'une bride adaptée. Ce tube hydrostatique 14 s'étend avantageusement au-dessus de la plateforme flottante 6A. Il est refermé de manière étanche à son extrémité supérieure 19 au moyen d'un couvercle 20. A noter que ce couvercle 20 peut être traversé par un évent 20A permettant l'évacuation des gaz produits par digestion anaérobie. Ce gaz sont susceptibles d'être collectés de manière connue par l'homme du métier.

De manière préférentielle, la bâche 13 est contenue dans une cage 21 qui en limite le volume total en évitant sa déformation excessive par son contenu. Une telle cage 21 est conçue, préférentiellement, de parois grillagées.

Dans sa partie inférieure 22, la bâche 13 peut également être lestée pour favoriser son déploiement et son parfait remplissage d'effluent.

En ce qui concerne les moyens collecteurs 12, ils comportent, et partant de points de collecte PC, un réseau de tuyaux d'assainissement 23 raccordé directement ou, selon le cas, au travers d'unités de transfert, à une unité de pompage-broyage 25 laquelle alimente la cuve de stockage tampon 11. Les points de collecte PC correspondent à des habitats producteurs d'effluents domestiques.

Au travers de l'unité de pompage-broyage 25, voire encore de l'unité de transfert, ces moyens collecteurs 12 assurent la collecte des effluents à traiter par pompage et permettent de s'affranchir de toutes les contraintes rencontrées, usuellement, lors d'une collecte gravitaire.

Ainsi, depuis les points collecteurs PC et vers, selon le cas, l'unité de transfert ou l'unité de pompage-broyage 25, les moyens collecteurs 12 peuvent faire appel à des réseaux de tuyaux, souples ou non, posés à même le sol avec ou sans protection, ensouillés ou non, immergés en partie ou en totalité.

Là encore et comme représentées sur la figure 1, l'unité de transfert et/ou l'unité de pompage broyage 25 sont susceptibles d'être implantées sur une plate-forme flottante 6B, de manière à éviter toute installation à terre ou tout du moins une installation susceptible d'être immergée en cas d'inondation.

Cette station d'épuration 1 peut encore être complétée par au moins une unité de traitement phytosanitaire 26 des effluents en sortie de la cuve de traitement aérobie 3.

Une telle unité de traitement phytosanitaire 26, sous forme, par exemple, d'une roselière, peut, elle aussi, être installée sur la plate-forme flottante principale 6 ou une plate-forme flottante secondaire 6C. Cette unité de traitement phytosanitaire26 a pour avantage de digérer une grande partie des matières restantes en suspension dans les effluents en sortie de traitement aérobie.

Un autre avantage de cette unité de traitement phytosanitaire 26, notamment sous forme d'une roselière, consiste à fixer des polluants comme le phosphore, le nitrate, mais également le cyanure ou des hydrocarbures. L'eau s'écoulant en sortie est ainsi susceptible de regagner le milieu environnant sans risque de pollution.

Selon l'invention encore, cette station d'épuration 1 comporte des moyens d'alimentation en énergie électrique autonome 27 comprenant, notamment, des moyens de production d'énergie électrique avantageusement, mais non nécessairement, de type solaire 28. Cependant, de tels moyens de production d'énergie électrique peuvent également prendre la forme d'une pile à combustible, notamment à l'éthanol. Avantageusement il leur est associé des moyens de stockage, tels que des batteries.

Là encore ces moyens d'alimentation en énergie électrique autonome 27 sont préférentiellement installés sur une plateforme flottante, qu'il s'agisse de la principale 6 ou d'une secondaire 6D.

Selon l'invention, la station d'épuration 1 comporte une unité de gestion 29 prévue pour gérer son fonctionnement en fonction, notamment, du débit d'effluent à traiter. En particulier, il peut être pris en compte le débit d'effluent alimentant la cuve de stockage tampon 11 au travers des moyens collecteurs 12 et/ou le niveau d'effluent contenu dans cette cuve de stockage tampon 11.

Dans ce but, ladite station d'épuration 1 comporte des moyens capteurs, par exemple de débit et/ou de pression et/ou de niveau, aptes à transmettre à l'unité de gestion 29 une information relative à ce débit et/ou ce volume d'effluent à traiter.

Au travers des données recueillies par l'intermédiaire de ces moyens capteurs, l'unité de gestion 29, grâce à des moyens de commande adaptés, intervient sur les différents composants de la station d'épuration 1, en l'occurrence :
sur les moyens de pompage que comprennent les moyens de raccordement amont 4 au travers desquels la cuve de traitement aérobie 3 est alimentée en effluent depuis la cuve de stockage tampon 11
- et/ ou encore sur les moyens de fonctionnement qu'intègre la cuve de traitement anaérobie 3 pour influencer le temps de séjour des effluents dans cette cuve.

A titre d'exemple, dans le cas d'une cuve de traitement aérobie 3 comprenant un bioréacteur 8 à disques et à injection d'air de digestion, il est possible d'intervenir sur ce temps de séjour en fonction du débit d'air injecté dans ce bioréacteur et/ou sur la vitesse de rotation des disques.

Ainsi, l'unité de gestion 29 est défini apte à agir sur des moyens de commande, selon le cas, de la pompe d'injection d'air dans le bio réacteur pour moduler le débit d'air injecté et/ou des moyens moteurs d'entraînement en rotation des disques de ce bio réacteur pour en réguler la vitesse.

En somme, le procédé mis en œuvre pour la gestion du fonctionnement de la station d'épuration 1 consiste :
A mesurer le débit d'alimentation de la cuve de stockage tampon 11 en effluent ;
Et/ ou à mesurer le niveau d'effluent contenu dans la cuve de stockage tampon 11 ;
Et à ajuster le temps de séjour des effluents dans la cuve de traitement aérobie 3 par ajustement de la vitesse de traitement aérobie en fonction du débit d'alimentation en effluent mesuré et/ou du niveau d'effluent dans la cuve de stockage tampon 11.

Si, comme cela apparaît à la lecture de la description qui précède, la cuve de stockage tampon 11 permet, de pallier aux variations, horaires, journalières, hebdomadaires et saisonnières des effluents à traiter, la cuve de traitement aérobie 3 se décomposant, elle-même, en un compartiment collecteur 9, un bioréacteur 8 et un compartiment décanteur 10, elle peut contribuer, elle-même, à lisser ces variations de flux d'effluent par la gestion des niveaux d'effluent contenu dans chacun de ces compartiments 9, 8, 10.

Aussi, de manière avantageuse, la station d'épuration 1 comporte un capteur de niveau d'effluent dans le compartiment collecteur 9 et/ou dans le bioréacteur 8 et/ou dans le compartiment décanteur 10. Ce où ces capteurs de niveau sont raccordés à l'unité de gestion 29 pour la commande de fonctionnement optimisé de la cuve de traitement aérobie 3.

Préférentiellement, cette unité de gestion 29 comporte des moyens de commande à distance, que ce soit par réseau internet, intranet ou de télécommunication adaptés, pour intervenir à distance sur le fonctionnement de la station d'épuration 1 et/ou pour surveiller les différents paramètres résultant des capteurs mis en œuvre et/ou pour des opérations de maintenance.

À ce propos, en complément des capteurs de débit, de pression et de niveau auxquels il a été fait référence plus haut, la station d'épuration 1 peut être équipée d'un certain nombre de capteurs additionnels tels que :
Un capteur de niveau de production d'énergie électrique ;
Un capteur de niveau d'énergie électrique stockée ;
Et toutes sortes de capteurs susceptibles d'informer l'unité de gestion 29 sur la qualité de traitement des effluents pour éviter tout risque de pollution.

Les avantages découlant de la présente invention consistent, non seulement, en une station d'épuration d'implantation possible en milieu aquatique ou sur terrain inondable, mais, en outre, une capacité de traitement d'effluents domestiques avec des qualités de rejet d'effluent traité obtenue, souvent, qu'au travers d'installations complexes qui ne peuvent répondre aux contraintes d'implantation sur l'eau ou encore sur site inondable.

## Revendications

1. Station d'épuration d'effluents domestiques flottante, comportant au moins une unité de traitement (2) comprenant au moins une première cuve de traitement aérobie (3) intégrée sur une plate-forme flottante principale (6) de manière à s'étendre au moins en partie sous la ligne de flottaison (7) de cette dernière, pour, sous l'effet de la poussée d'Archimède, réduire le poids supporté par cette dernière au travers de cette cuve de traitement aérobie (3), celle-ci étant pourvue de moyens de raccordement amont (4) pour son alimentation en effluent à traiter et de moyens de raccordement aval (5) d'évacuation d'effluent digéré, **caractérisée en ce que** l'unité de traitement (2) comporte au moins une cuve de stockage tampon (11) d'effluent à traiter connectée aux moyens de raccordement amont (4) de la cuve de traitement aérobie (3) et montée sur ladite plate-forme flottante principale (6) ou une plate-forme flottante secondaire (6A) de manière à s'étendre en grande partie sous la ligne de flottaison (7, 7A) de cette dernière, **caractérisée en ce que** cette cuve de stockage tampon (11) est définie de volume variable et constituée par une bâche (13).

2. Station d'épuration selon la revendication 1, **caractérisée en ce que** la cuve de traitement aérobie (3) intègre un bioréacteur (8).

3. Station d'épuration selon la revendication 1, **caractérisée en ce que** dans la cuve de traitement aérobie (3) est délimitée, d'une part, par un compartiment collecteur (9) situé en amont du bioréacteur (8) et avec lequel communiquent les moyens de raccordement amont (4) et, d'autre part, un compartiment décanteur (10) dans lequel se déversent les effluents en sortie du bioréacteur (8) pour, après décantation, être évacués au travers des moyens de raccordement aval (5).

4. Station d'épuration selon l'une quelconque des revendications précédentes, **caractérisée en ce que** la cuve de stockage tampon (11) est conçue pour assurer un prétraitement anaérobie des effluents.

5. Station d'épuration l'une quelconque des revendications précédentes, **caractérisée en ce qu'**un tube hydrostatique (14) rigide aux parois ajourées (15) s'étend verticalement à l'intérieur de la bâche (13).

6. Station d'épuration selon la revendication 5, **caractérisée en ce qu'**à l'intérieur du tube hydrostatique (14) pénètre, en outre, au moins un tube d'alimentation (16) en effluent à traiter, ainsi qu'au moins un tube de puisage (17) communiquant avec les moyens de raccordement amont (4) de la cuve de traitement aérobie (3).

7. Station d'épuration selon l'une quelconque des revendications précédentes, **caractérisée en ce que** la bâche (13) est contenue dans une cage (21) qui en limite le volume total.

8. Station d'épuration selon l'une quelconque des revendications précédentes, **caractérisée en ce qu'**elle comporte des moyens collecteurs (12) comprenant un réseau de tuyaux d'assainissement (23) reliant des points de collecte PC directement ou, selon le cas, au travers d'unités de transfert, à une unité de pompage-broyage (25) raccordée à la cuve de stockage tampon (11).

9. Station d'épuration selon l'une quelconque des revendications précédentes, **caractérisée en ce qu'**elle comporte au moins une unité de traitement phytosanitaire (26) des effluents en sortie de la cuve de traitement aérobie (3), ladite unité de traitement phytosanitaire (26) étant montée sur une plate-forme flottante (6) ; (6C).

10. Station d'épuration selon l'une quelconque des revendications précédentes, **caractérisée en ce qu'**elle comporte des moyens d'alimentation en énergie électrique autonome (27) comprenant des moyens de production d'énergie électrique (28) et des moyens de stockage, tels que des batteries, lesdits moyens d'alimentation en énergie électrique autonome (27) étant montés sur une plate-forme flottante (6) ; (6D).

11. Station d'épuration selon la revendication 10, **caractérisée en ce que** les moyens d'alimentation en énergie électrique autonome (27) sont installés sur une plateforme flottante principale (6) ou secondaire (6D).

12. Station d'épuration selon l'une quelconque des revendications précédentes, **caractérisée en ce qu'**elle comporte une unité de gestion (29) et, d'une part, des moyens capteurs de débit et/ou de pression et/ou de niveau, aptes à transmettre à l'unité de gestion (29) une information relative au débit et/ou au volume d'effluent à traiter et, d'autre part, des moyens de commande adaptés aux différents composants de la station d'épuration.

13. Station d'épuration selon la revendication 12, **caractérisée en ce qu'**elle comporte des moyens de commande à distance par réseau internet, intranet ou de télécommunication adapté, pour intervenir à distance sur le fonctionnement de la station d'épuration (1) et/ou pour surveiller les différents paramètres résultant des capteurs mis en œuvre et/ou pour des opérations de maintenance.

14. Procédé pour la gestion du fonctionnement d'une station d'épuration (1), selon les revendications précédentes, **caractérisé en ce que** :
a. On mesure le débit d'alimentation de la cuve de stockage tampon (11) en effluent ;
b. Et/ ou on mesure le niveau d'effluent contenu dans la cuve de stockage tampon (11) ;
c. Et on ajuste le temps de séjour des effluents dans la cuve de traitement aérobie (3) par ajustement de la vitesse de traitement aérobie en fonction du débit d'alimentation en effluent mesuré et/ou du niveau d'effluent dans la cuve de stockage tampon (11).

## Patentansprüche

1. Schwimmende häusliche Abwasserbehandlungsanlage, umfassend mindestens eine Behandlungseinheit (2), die mindestens einen ersten aeroben Behandlungstank (3) umfasst, der auf einer schwimmenden Hauptplattform (6) so integriert ist, um sich zumindest teilweise unter die Wasserlinie (7) des letzteren zu erstrecken, um unter der Wirkung der Auftriebskraft das Gewicht zu reduzieren, das von der letzteren durch diesen aeroben Behandlungstank (3) getragen wird, wobei dieser mit stromaufwärtigen Anschlussmitteln (4) für die Zufuhr des zu behandelnden Abwassers und mit stromabwärtigen Anschlussmitteln (5) für die Ableitung des ausgefaulten Abwassers ausgestattet ist,
**dadurch gekennzeichnet, dass** die Behandlungseinheit (2) mindestens einen Pufferspeichertank (11) für die zu behandelnden Abwässer umfasst, der mit den stromaufwärtigen Anschlussmitteln (4) des aeroben Behandlungstanks (3) verbunden ist und auf der schwimmenden Hauptplattform (6) oder einer sekundären schwimmenden Plattform (6A) montiert ist, um sich weitgehend unter der Wasserlinie (7, 7A) des letzteren zu erstrecken,
**dadurch gekennzeichnet, dass** dieser Pufferspeichertank (11) durch ein variables Volumen definiert ist und aus einer Plane (13) besteht.

2. Abwasserbehandlungsanlage nach Anspruch 1,
**dadurch gekennzeichnet, dass** der aerobe Behandlungstank (3) einen Bioreaktor (8) integriert.

3. Abwasserbehandlungsanlage nach Anspruch 1,
**dadurch gekennzeichnet, dass** der aerobe Behandlungstank (3) einerseits durch eine Sammelkammer (9) begrenzt ist, die sich stromaufwärts des Bioreaktors (8) befindet und mit der die stromaufwärtigen Anschlussmittel (4) kommunizieren, und andererseits durch eine Dekanterkammer (10), in die die den Bioreaktor (8) verlassenden Abwässer fließen, um nach der Dekantierung über die stromabwärtigen Anschlussmittel (5) evakuiert zu werden.

4. Abwasserbehandlungsanlage nach einem der vorstehenden Ansprüche,
**dadurch gekennzeichnet, dass** der Pufferspeichertank (11) dazu ausgelegt ist, eine anaerobe Vorbehandlung der Abwässer zu gewährleisten.

5. Abwasserbehandlungsanlage nach einem der vorstehenden Ansprüche,
**dadurch gekennzeichnet, dass** sich ein starres hydrostatisches Rohr (14) mit perforierten Wänden (15) vertikal innerhalb der Plane (13) erstreckt.

6. Abwasserbehandlungsanlage nach Anspruch 5,
**dadurch gekennzeichnet, dass** ins Innere des hydrostatischen Rohrs (14) ferner mindestens ein Versorgungsrohr (16) des zu behandelnden Abwassers sowie mindestens ein Absaugrohr (17) eindringt, das mit den stromaufwärtigen Anschlussmitteln (4) des aeroben Behandlungstankt (3) in Verbindung steht.

7. Abwasserbehandlungsanlage nach einem der vorstehenden Ansprüche,
**dadurch gekennzeichnet, dass** die Plane (13) in einem Käfig (21) enthalten ist, der das Gesamtvolumen begrenzt.

8. Abwasserbehandlungsanlage nach einem der vorstehenden Ansprüche,
**dadurch gekennzeichnet, dass** sie Sammelmittel (12) umfasst, die ein Netz von Kanalisationsrohren (23) umfassen, die PC-Sammelpunkte direkt oder gegebenenfalls über Transfereinheiten mit einer Pump-Mahl-Einheit (25) verbinden, die mit dem Pufferspeichertank (11) verbunden ist.

9. Abwasserbehandlungsanlage nach einem der vorstehenden Ansprüche,
**dadurch gekennzeichnet, dass** sie mindestens eine phytosanitäre Behandlungseinheit (26) für die Abwässer umfasst, die den aeroben Behandlungstank (3) verlassen, wobei die phytosanitäre Behandlungseinheit (26) auf einer schwimmenden Plattform (6); (6C) montiert ist.

10. Abwasserbehandlungsanlage nach einem der vorstehenden Ansprüche,
**dadurch gekennzeichnet, dass** sie Mittel zur Zufuhr autonomer elektrischer Energie (27) umfasst, die Mittel zur Erzeugung elektrischer Energie (28) und Mittel zur Speicherung umfassen, wie Batterien, wobei die Mittel zur Zufuhr autonomer elektrischer Energie (27) auf einer schwimmenden Plattform (6); (6D) montiert sind.

11. Abwasserbehandlungsanlage nach Anspruch 10,
**dadurch gekennzeichnet, dass** die Mittel zur Zufuhr autonomer elektrischer Energie (27) auf einer schwimmenden Haupt- (6) oder sekundären (6D) Plattform installiert sind.

12. Abwasserbehandlungsanlage nach einem der vorstehenden Ansprüche,
**dadurch gekennzeichnet, dass** sie eine Verwaltungseinheit (29) umfasst, und, einerseits Durchfluss- und/oder Druck- und/oder Füllstandssensormittel, die in der Lage sind, Informationen über den Durchfluss und/oder das Volumen des zu behandelnden Abwassers an die Verwaltungseinheit (29) zu übermitteln, und andererseits Steuerungsmittel, die an die verschiedenen Komponenten der Abwasserbehandlungsanlage angepasst sind.

13. Abwasserbehandlungsanlage nach Anspruch 12,
**dadurch gekennzeichnet, dass** sie Fernsteuerungsmittel über Internet, Intranet oder geeignete Telekommunikationsnetze umfasst, um aus der Ferne in den Betrieb der Abwasserbehandlungsanlage (1) einzugreifen und/oder die verschiedenen Parameter zu überwachen, die sich aus den eingebauten Sensoren und/oder für Wartungsarbeiten ergeben.

14. Verfahren zur Verwaltung des Betriebs einer Abwasserbehandlungsanlage (1) nach den vorstehenden Ansprüchen,
**dadurch gekennzeichnet, dass:**
a. die Abwasserzufuhrrate zum Pufferspeichertank (11) gemessen wird;
b. und/oder der Füllstand des im Pufferspeichertank (11) enthaltenen Abwassers gemessen wird;
c. und die Verweilzeit der Abwässer im aeroben Behandlungstank (3) durch Anpassen der aeroben Behandlungsgeschwindigkeit in Abhängigkeit der gemessenen Abwasserzufuhrrate und/oder des Abwasserfüllstands im Pufferspeichertank (11) eingestellt wird.

## Claims

1. Floating domestic effluent treatment plant, including at least one treatment unit (2) comprising at least one first aerobic treatment tank (3) integrated on a main floating platform (6) so as to extend at least partially below the waterline (7) of the platform, in order, under the effect of Archimedean buoyant force, to reduce the weight supported by the platform due to this aerobic treatment tank (3), the tank being provided with upstream connection means (4) for supplying it with effluent to be treated and downstream connection means (5) for discharging digested effluent, **characterized in that** the treatment unit (2) includes at least one buffer storage tank (11) for effluent to be treated, which is connected to the upstream connection means (4) of the aerobic treatment tank (3) and mounted on said main floating platform (6) or a secondary floating platform (6A) so as to extend substantially below the waterline (7, 7A) of said platform,
**characterized in that** this buffer storage tank (11) is defined as having a variable volume and consists of a liner (13).

2. Treatment plant according to claim 1, **characterized in that** the aerobic treatment tank (3) incorporates a bioreactor (8).

3. Treatment plant according to claim 1, **characterized in that** the aerobic treatment tank (3) is delimited by both a collector compartment (9), which is located upstream of the bioreactor (8) and with which the upstream connection means (4) communicate, and by a settling compartment (10) into which the effluent leaving the bioreactor (8) flows in order to be discharged through the downstream connection means (5) after settling.

4. Treatment plant according to any one of the preceding claims,
**characterized in that** the buffer storage tank (11) is designed to provide anaerobic pretreatment of the effluent.

5. Treatment plant any one of the preceding claims, **characterized in that** a rigid hydrostatic tube (14) with perforated walls (15) extends vertically inside the liner (13).

6. Treatment plant according to claim 5, **characterized in that** at least one supply tube (16) for the effluent to be treated and at least one draw-off tube (17) communicating with the upstream connection means (4) of the aerobic treatment tank (3) penetrates the inside of the hydrostatic tube (14).

7. Treatment plant according to any one of the preceding claims,
**characterized in that** the liner (13) is contained in a housing (21) which limits the total volume thereof.

8. Treatment plant according to any one of the preceding claims,
**characterized in that** it includes collector means (12) comprising a network of sanitation pipes (23) connecting collection points PC directly or, depending on the circumstances, by means of transfer units, to a pump-comminution unit (25) which is connected to the buffer storage tank (11).

9. Treatment plant according to any one of the preceding claims,
**characterized in that** it comprises at least one phytosanitary treatment unit (26) for effluent leaving the aerobic treatment tank (3), said phytosanitary treatment unit (26) being mounted on a floating platform (6); (6C).

10. Treatment plant according to any one of the preceding claims,
**characterized in that** it comprises self-contained electrical power supply means (27) comprising electrical power generation means (28) and storage means, such as batteries, said self-contained electrical power supply means (27) being mounted on a floating platform (6); (6D).

11. Treatment plant according to claim 10, **characterized in that** the self-contained electrical power supply means (27) are installed on a main (6) or secondary (6D) floating platform.

12. Treatment plant according to any one of the preceding claims,
**characterized in that** it includes a management unit (29) and flow and/or pressure and/or level sensor means, which are capable of transmitting information to the management unit (29) relating to the flow and/or volume of effluent to be treated, and control means which are adapted to the various components of the treatment plant.

13. Treatment plant according to claim 12, **characterized in that** it comprises means for remotely controlling via Internet, intranet or suitable telecommunications network, for intervening remotely in the operation of the treatment plant (1) and/or for monitoring the various parameters resulting from the sensors used and/or for maintenance operations.

14. Method for managing the operation of a treatment plant (1), according to the preceding claims, **characterized in that:**
a. The feed rate of effluent to the buffer storage tank (11) is measured;
b. And/or the effluent level in the buffer storage tank (11) is measured;
c. And the residence time of the effluent in the aerobic treatment tank (3) is adjusted by adjusting the aerobic treatment rate on the basis of the measured effluent feed rate and/or the effluent level in the buffer storage tank (11).
